(19) Europäisches Patentamt
European Patent Office
Office européen des brevets

(11) Veröffentlichungsnummer: **0 081 760**
**B1**

(12) # EUROPÄISCHE PATENTSCHRIFT

(45) Veröffentlichungstag der Patentschrift: **21.08.85**

(51) Int. Cl.⁴: **D 21 H 3/62**, C 08 G 77/22, E 04 C 2/26

(21) Anmeldenummer: **82111156.4**

(22) Anmeldetag: **02.12.82**

(54) **Verwendung von Organopolysiloxanen bei der Herstellung von Papierbeschichteten Gipsplatten.**

(30) Priorität: **16.12.81 DE 3149791**

(43) Veröffentlichungstag der Anmeldung:
**22.06.83 Patentblatt 83/25**

(45) Bekanntmachung des Hinweises auf die Patenterteilung:
**21.08.85 Patentblatt 85/34**

(84) Benannte Vertragsstaaten:
**BE DE FR GB IT NL SE**

(56) Entgegenhaltungen:
**DE-A-2 330 887**
**DE-A-2 744 494**
**DE-B-1 546 410**
**US-A-3 247 281**

**Die Akte enthält technische Angaben, die nach dem Eingang der Anmeldung eingereicht wurden und die nicht in dieser Patentschrift enthalten sind.**

(73) Patentinhaber: **Th. Goldschmidt AG, Goldschmidtstrasse 100 Postfach 101461, D-4300 Essen 1 (DE)**

(72) Erfinder: **Fink, Hans-Ferdi, Brassertstrasse 46, D-4300 Essen 1 (DE)**
Erfinder: **Koerner, Götz, Dr., Kantorie 126, D-4300 Essen (DE)**
Erfinder: **Luksch, Edmund, Bolkendyck 8, D-4300 Essen (DE)**

**EP 0 081 760 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Beidseitig mit Papier beschichtete Gipsplatten sind häufig verwendete Bauelemente. Sie werden entsprechend dem Stand der Technik meist in kontinuierlichen Verfahren hergestellt, indem Gipsbrei auf eine untere, kontinuierlich herangeführte Papierbahn aufgebracht wird. Anschließend wird die Oberfläche des Gipsbreies mit einer weiteren Papierbahn abgedeckt. Dieses Produkt wird durch Formwalzen zu flachen Platten verformt und bei erhöhten Temperaturen ausgehärtet.

Als Papierbahnen werden im allgemeinen mehrschichtige Kartonpapiere verwendet, die aus Abfallpapier oder anderem Ausgangspapierbrei hergestellt werden. Von wesentlicher Bedeutung ist der Erhalt einer festen Bindung zwischen Gipskern und Papierdeckschichten. Unbehandeltes Papier saugt aus den Grenzschichten des Gipskerns Wasser und bewirkt dadurch, daß der Gips im Kern mit einem anderen Wasserverhältnis als in den äußeren Bereichen abbindet. Dies kann zu einer glatten Ablösung der Papierschicht vom Gipskern oder zu einer Delaminierung der Gipsplatte im äußeren Bereich führen. Eine ausführliche Darstellung dieser und weiterer Störungen, die unbrauchbare Produkte ergeben, findet sich in der DE-A-1 646 765 und der US-A-3 389 042.

Es sind zahlreiche Verfahren bekannt, die die Beseitigung dieses Fehlerbildes anstreben. Gemeinsames Kennzeichen dieser Verfahren ist, das Wasseraufnahmevermögen der verwendeten Abdeckpapiere zu vermindern. Dies geschieht meist durch Behandeln der Papiere mit siliciumorganischen Verbindungen, die auf dem Papier fixiert werden.

Der Grad der Verringerung der Wasserabsorption der behandelten Papiere kann dabei durch den Cobb-Test entsprechend den TAPPI-Richtlinien bestimmt werden. Dieser Cobb-Wert stellt die Differenz zwischen Naß- und Trockengewicht einer bestimmten Papierprobe dar.

Der US-A-4 252 933 liegt die Aufgabe zugrunde, die Oberfläche von Papier, Gummi, Kunststoff oder Metall mit einem nicht klebenden, wasserabweisenden, mechanisch beanspruchbaren und gleitfähigglatten Überzug zu versehen, der gleichzeitig die Haftung von anderen Siliconen auf der Oberfläche verbessern sollte. Es soll somit ein zusammenhängender Oberflächenfilm erhalten werden. Diese Polysiloxanbeschichtung besteht aus A) Organopolysiloxan mit endständig gebundenen Hydroxylgruppen und einer Viskosität von 300 bis 10000000 cSt (mPa · s) bei 25°C und B) Organopolysiloxan mit Epoxygruppen sowie einer aminofunktionellen Siliciumverbindung, bei der die Aminogruppe über Kohlenstoff an das Siliciumatom gebunden ist, wobei das Organopolysiloxan mit Epoxygruppen einerseits und die aminofunktionelle Siliciumverbindung andererseits in solchen Mengenverhältnissen gemischt sind, daß je Epoxygruppe 0,1 bis 10 Aminogruppen vorhanden sind, wobei auch anstelle des Gemisches die Umsetzungsprodukte treten können. In Vergleichsversuchen wird gezeigt, daß der gewünschte Effekt bei Abwesenheit von Organopolysiloxanen mit Epoxygruppen nicht eintritt. Ihre Gegenwart ist somit zwingend erforderlich.

Zur Verringerung der Wasserabsorption der Papiere für die Herstellung von papierbeschichteten Gipsplatten hat man bereits verschiedene siliciumorganische Verbindungen empfohlen.

Aus der US-A-3 389 042 ist es bekannt, härtbare Silicone, wie epoxyfunktionelle Polysiloxane, Methylwasserstoffsiloxane, mit Isocyanaten modifizierte Silane und Siloxane, sowie Alkoxysilane und daraus hergestellte Siloxane für diesen Zweck einzusetzen.

In der US-A-3 431 143 wird der Zusatz von epoxyfunktionellen Siliconen zum Papier während dessen Herstellung beschrieben, wobei das so behandelte Papier nach der Aushärtung der epoxyfunktionellen Silicone hydrophobiert ist.

In der US-A-4 258 102 werden Siliconzubereitungen beansprucht, welche aus linearen oder verzweigten Polysiloxanolen einer Viskosität von 500 bis 1 000 000 cP (mPa · s) bei 25°C und bestimmten Mengen kolloidaler Kieselsäure bestehen. Diese Zubereitungen werden auf das Papier nach seiner Herstellung aufgebracht und dort ausgehärtet.

Die Härtung solcher Organosiliciumverbindungen ist in wirtschaftlich vertretbarer Zeit nur in Gegenwart eines Katalysators möglich. Hierdurch wird aber die Lagerstabilität der die Silicone enthaltenden Zubereitungen verringert. Es ist außerdem notwendig, diese Zubereitung dem Salzgehalt des Papieres (z. B. Aluminiumsulfat) und dessen pH-Wert so anzupassen, daß bei der Behandlung der Papiere keine Ausfällungen oder Vergelungen auftreten.

In der DE-A-2 744 494 sind geleimte Pappen für Gipsbauplatten beschrieben, die zumindest auf einer ihrer beiden Oberflächen geleimt sind, welche dadurch gekennzeichnet sind, daß das Leimungsmittel ein Organopolysiloxan der folgenden Zusammensetzung ist oder enthält:

(a) 99,95 bis 85 Mol-% Organosiloxaneinheiten der allgemeinen chemischen Formel

$$R^1_a SiO_{\frac{4-a}{2}}$$

wobei $R^1$ ein Wasserstoffatom oder ein einwertiger Kohlenwasserstoffrest ist, nämlich Methyl, Ethyl, Propyl, Vinyl oder Phenyl und a 1, 2 oder 3 ist;

(b) 0,05 bis 10 Mol-% Mercaptogruppen enthaltende Organosiloxaneinheiten der allgemeinen chemischen Formel

$$HS-(CH_2)_p-SiR^2_bO_{\frac{3-b}{2}}$$

wobei $R^2$ ein Wasserstoffatom oder eine einwertige Kohlenwasserstoffgruppe ist, und zwar Methyl, Ethyl, Propyl oder Phenyl und b Null, 1 oder 2 und p 1, 2, 3 oder 4 sind und

(c) Null oder bis zu 5 Mol-% Methacryloxygruppen enthaltende Organosiloxaneinheiten der allgemeinen chemischen Formel

$$H_2C{=}C(CH_3)-CO-O-(CH_2)_q-SiR^3_cO_{\frac{3-c}{2}}$$

wobei $R^3$ ein Wasserstoffatom oder eine einwertige Kohlenwasserstoffgruppe ist, und zwar Methyl, Ethyl, Propyl oder Phenyl und c Null, 1 oder 2 und q 1, 2, 3 oder 4 sind.

Diese Organosiloxane härten zwar auch ohne Gegnwart eines Katalysators aus, jedoch werden vorzugsweise zur Aushärtung Metallsalze organischer Säuren zugesetzt.

Der vorliegenden Erfindung liegt deshalb die Aufgabe zugrunde, spezielle siliciumorganische Verbindungen aufzufinden, die diese Nachteile nicht zeigen. Insbesondere sollen die Verbindungen ohne Verwendung spezieller Härtungskatalysatoren aushärten. Die Zubereitungen sollen hohe Stabilität in Anwendungskonzentration aufweisen und vom pH-Wert des Papieres unabhängig sein. Die Verbindungen sollen unabhängig vom Salzgehalt des Papieres wirksam sein, so daß auch neutrale, insbesondere aluminiumsulfatfreie Papiere verwendet werden können.

Überraschenderweise wurde gefunden, daß diese Forderungen von bestimmten, zum Teil bekannten siliciumorganischen Verbindungen erfüllt werden können.

Gegenstand vorliegender Erfindung ist deshalb die Verwendung von Organopolysiloxanen der allgemeinen durchschnittlichen Formel

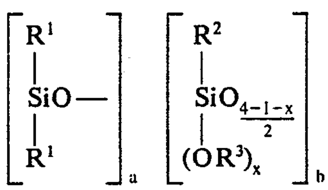 (I)

wobei

$R^1$ ein Alkyl- oder Arylrest ist, jedoch mindestens 80% der Reste $R^1$ Alkylreste sind,
$R^2$ ein Alkylrest oder der Rest $R^4Z$ ist, jedoch mindestens $^2/_3$ der Reste $R^2$ $R^4Z$-Reste sind, und wobei

$R^4$ ein zweiwertiger Kohlenwasserstoffrest und
Z der Rest $-NH_2$, $-NH(CH_2)_c-NH_2$, $-NH(CH_2)_cNH(CH_2)_cNH_2$, $-NHCONH_2$, wobei c = 2 oder 3 ist, $-SH$, $-S_4-R^4-Si(OR^3)_3$, $-P(C_6H_5)_2$,

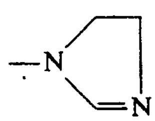

ist,

$R^3$ ein Alkylrest mit 1 bis 4 Kohlenstoffatomen oder ein Wasserstoffrest ist,
a $\geqq 4$,
$\frac{b}{a}$ $\geqq 0{,}001$, aber $\leqq 0{,}5$,
x $\geqq 0{,}1$, aber $\leqq 2$ ist,

als Mittel zur Verringerung der Wasseraufnahme von Papier, welches zur Abdeckung von Gipsbrei bei der Herstellung von mit Papier kaschierten Gipsplatten bestimmt ist.

Die allgemeine Formel stellt die durchschnittliche Formel der Organopolysiloxane dar. Die Verbindungen liegen in Form ihrer polymeren Gemische vor. Innerhalb des Gemisches können die Substituenten und Indices im Rahmen der gezeigten Bedeutungen und Grenzen unterschiedlich sein.

Vorzugsweise hat $R^1$ die Bedeutung eines Alkylrestes mit 1 bis 4 Kohlenstoffatomen, wobei die Alkylreste mit 3 oder 4 Kohlenstoffatomen auch verzweigt sein können. Besonders bevorzugt ist der Methylrest. $R^1$ kann auch die Bedeutung eines Arylrestes, vorzugsweise eines Phenylrestes, haben, jedoch müssen mindestens 80% der Reste $R^1$ Alkylreste sein.

Hat $R^2$ die Bedeutung eines Alkylrestes, sind wiederum die Alkylreste mit 1 bis 4 Kohlenstoffatomen

bevorzugt, wobei die Reste mit 3 oder 4 Kohlenstoffatomen verzweigt sein können. Besonders bevorzugt ist der Methylrest.

$R^4$ ist vorzugsweise ein Alkylenrest, insbesondere der Äthylen- oder Propylenrest.

Z ist vorzugsweise der Aminrest oder der Di- oder Trialkylenaminrest.

$R^3$ ist bevorzugt der Methyl- oder Äthylrest.

Die lineare Siloxankette des erfindungsgemäß zu verwendenden Siloxans hat mindestens vier difunktionelle Siloxyeinheiten. Kettenlängen von 10 bis 250 Siloxyeinheiten, insbesondere 20 bis 60 Siloxyeinheiten je Block sind bevorzugt.

Die Menge der Siloxyeinheiten mit $OR^3$-Resten ist durch das Verhältnis von $\frac{b}{a}$ gegeben. $\frac{b}{a}$ soll gleich oder größer als 0,001 sein. Dies ergibt bei dem Minimalwert von $a = 4$ für b den Wert von 0,04. Der Wert von 0,5 für $\frac{b}{a}$ soll nicht überschritten werden. Hier ergibt sich für $a = 4$ ein Wert von 2 für b. x ist größer als Null. Im Polymerengemisch muß somit eine Mindestmenge Alkoxy- oder Hydroxygruppen vorhanden sein.

Die folgenden Strukturformeln sind Beispiele für unter die allgemeine Formel I fallende Verbindungen:

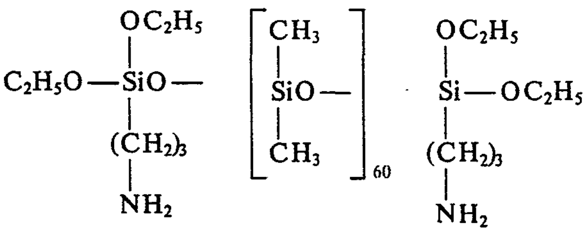

(II)

dies entspricht der Formel I mit

$R^1 = CH_3-$; $R^2 = -(CH_2)_3-NH_2$, wobei $-(CH_2)_3- = R^4$ und $-NH_2 = Z$ ist, $R^3 = C_2H_5-$; $a = 60$; $b = 2$; $\frac{b}{a} = 0{,}033$; $x = 2$.

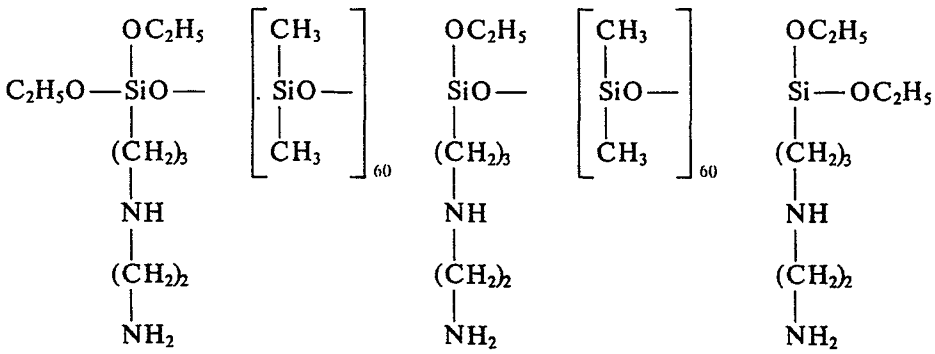

(III)

dies entspricht Formel I mit

$R^1 = CH_3-$; $R^2 = -(CH_2)_3NH(CH_2)_2NH_2$ mit $c = 2$, wobei $-(CH_2)_3- = R^4$ und $-NH(CH_2)_2NH_2 = Z$ ist; $R^3 = C_2H_5-$; $a = 120$; $b = 3$; $\frac{b}{a} = 0{,}025$; $x = \frac{5}{3}$.

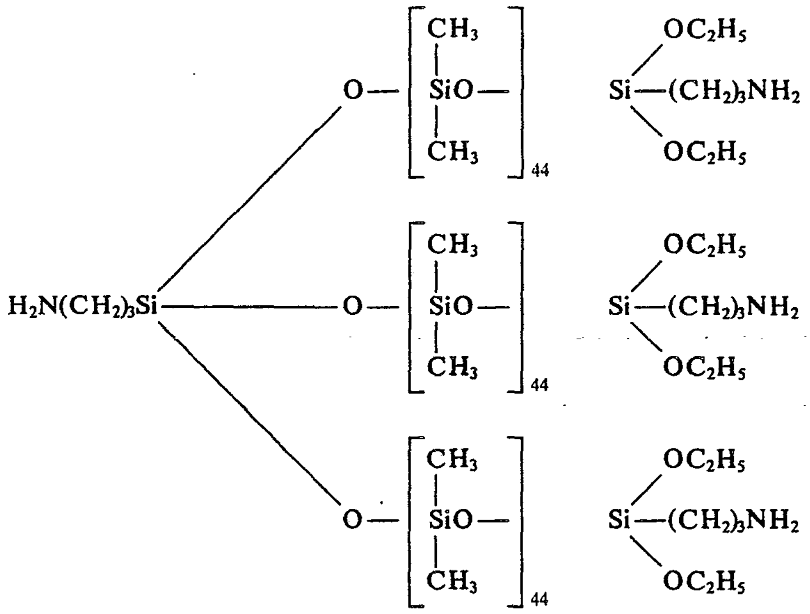

(IV)

dies entspricht Formel I mit

$R^1 = CH_3-$; $R^2 = -(CH_2)_3NH_2$, wobei $-(CH_2)_3- = R^4$ und $-NH_2 = Z$ ist; $R^3 = C_2H_5-$; $a = 132$; $b = 4$; $\frac{b}{d} = 0{,}03$; $x = 1{,}5$.

Die erfindungsgemäß zu verwendenden siliciumorganischen Verbindungen können in dem Fachmann bekannter Weise hergestellt werden. Dabei kommen insbesondere folgende Herstellungsverfahren in Betracht:

Man kann $\alpha,\omega$-Siloxanole der Formel

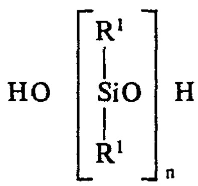

wobei n eine ganze Zahl $\geqq 4$ ist, mit Silanen der allgemeinen Formel $R^2Si(OR^3)_3$, gegebenenfalls in Gegenwart organischer Lösungsmittel, wie z. B. Toluol, unter partieller Abspaltung des Alkohols $R^3OH$, umsetzen.

Vorzugsweise erfolgt die Umsetzung in einem solchen Mengenverhältnis, daß einer SiOH-Gruppe des Polysiloxanols $\geqq 1{,}1$ bis 3 $OR^3$-Gruppen des Silans entsprechen.

Die Umsetzung wird vorzugsweise bei erhöhten Temperaturen, z. B. bei der Siedetemperatur des Lösungsmittels oder, falls kein Lösungsmittel verwendet wird, bei Temperaturen $\geqq 150\,°C$ durchgeführt.

Eine weitere Möglichkeit der Herstellung der erfindungsgemäß enthaltenen siliciumorganischen Verbindungen besteht in der Äquilibrierung von insbesondere cyclischen Siloxanen mit den vorgenannten Silanen in Gegenwart an sich bekannter Äquilibrierungskatalysatoren, wie anorganischen oder organischen Säuren oder alkalischen Katalysatoren, bei Temperaturen von 60 bis 100°C. Die Mitverwendung von Lösungsmitteln ist möglich, aber nicht zwingend notwendig.

Die nach diesen Verfahren hergestellten siliciumorganischen Verbindungen können mit Hilfe der hierfür bekannten Emulgatoren in die Form einer wäßrigen Emulsion vom Typ Öl/Wasser emulgiert werden. Beispiele derartiger Emulgatoren sind: nichtionogene Emulgatoren, wie die Anlagerungsprodukte von Äthylenoxid an Verbindungen mit aciden Wasserstoffen, z. B. Fettalkohole oder Alkohole der Oxosynthese; anionische Emulgatoren, wie z. B. die Aminsalze von Alkylbenzolsulfonsäuren; kationische Emulgatoren, wie z. B. Dimethyldidecylammoniumchlorid oder Dimethylstearylbenzylammoniumchlorid. Die Emulgatoren werden dabei im Regelfall in einer Menge von 2 bis 10%, bezogen auf zu emulgierende siliciumorganische Verbindungen, verwendet. Die Emulgierung selbst verläuft in an sich bekannter Weise, indem man z. B. die siliciumorganischen Verbindungen und den Emulgator vorlegt und das Wasser langsam einrührt oder indem man zunächst die siliciumorganischen Verbindungen in einer konzentrierten wäßrigen Lösung oder Verteilung des Emulgators emulgiert und die erhaltene Voremulsion

mit Wasser verdünnt. Die Emulsionen können durch Verwendung scherkraftreicher Rührorgane homogenisiert werden.

Es ist jedoch auch möglich, die Herstellung der siliciumorganischen Verbindungen so durchzuführen, daß direkt Emulsionen erhalten werden. Dies kann durch eine Emulsionspolymerisation erfolgen.

Die Emulsionspolymerisation verläuft in Gegenwart saurer oder basischer Katalysatoren, z. B. Dodecylbenzolsulfonsäure, Kaliumhydroxid oder Dimethyldidecylammoniumhydroxid. Dabei führt man die Reaktion insbesondere in einem Temperaturbereich von 90 bis 95°C durch. Die Verwendung von Lösungsmitteln ist möglich, aber nicht zwingend notwendig.

Aminoalkylgruppen enthaltende Siloxane sind aus den US-Patentschriften 3 460 981, 3 503 933 und 3 836 371 bekannt. Sie werden zur Schlichtung von Glasfasern verwendet. Hieraus läßt sich jedoch der erfindungsgemäße Verwendungszweck nicht herleiten. Es kann aber auf die dort angegebenen Herstellverfahren Bezug genommen werden.

Die erfindungsgemäß zu verwendenden Organosiliciumverbindungen werden zweckmäßig in Form einer möglichst konzentrierten Emulsion oder Dispersion in den Handel gebracht, wobei der Gehalt der Zubereitungen an siliciumorganischen Verbindungen im wesentlichen von der Stabilität der Emulsionen abhängt. Es ist durchaus möglich, Mittel in den Handel zu bringen, die 50 Gew.-% der siliciumorganischen Verbindungen enthalten. Für die Anwendung zum Zweck der Verringerung der Wasseraufnahme von Papier für die Herstellung von Gipsbauplatten werden diese konzentrierten Emulsionen jedoch verdünnt. Der Verdünnungsgrad richtet sich dabei in erster Linie nach der Menge an siliciumorganischen Verbindungen, die auf und in das Papier gebracht werden sollen. Es ist so beispielsweise möglich, die konzentrierte Handelsform des Mittels z. B. auf eine Anwendungskonzentration von 1% wirksamer Substanz zu verdünnen.

Der erfindungsgemäß angestrebte Zweck der Verringerung der Wasseraufnahme des Papiers für die Herstellung von Gipsbauplatten wird in der Regel bei einer Auflage von etwa 150 bis 300 mg Polysiloxan/$m^2$ Papier erreicht und zweckmäßig durch Vorversuche ermittelt. Dabei kann der Zusatz des erfindungsgemäß zu verwendenden Polysiloxans während der Herstellung des Papieres oder auf das fertige Papier erfolgen. Gibt man die verdünnte, wäßrige Zubereitung während der Herstellung des Papiers zu, erfolgt die Zugabe zweckmäßig während der Trockenstufe, nachdem das sich verfestigende Papier bereits die Hauptmenge des Wassers verloren hat.

Wird bei der Herstellung von Karton auf das teilweise entwässerte Papier erneut Papierbrei aufgetragen, so kann es genügen, nur der Papierschicht die wäßrige Zubereitung der siliciumorganischen Verbindung zuzusetzen, welche bei der späteren Verwendung in direktem Kontakt zum Gipsbrei steht.

Man kann die Zubereitung auch auf das fertige Papier aufbringen. Zweckmäßig verwendet man hierbei direkt die Stammemulsion oder nur geringfügig verdünnte Stammemulsion und trägt die Zubereitungen mit einem dosierten Walzenauftrag auf das Papier auf oder verwendet für den Auftrag ein Rakelsystem. Es ist jedoch auch möglich, verdünnte Zubereitungen auf das Papier aufzusprühen.

Die Härtung des erfindungsgemäß zu verwendenden Organopolysiloxans setzt bei und nach der Trocknung des Papieres ein. Die Härtungszeit ist dabei von der Temperatur abhängig. Bei Temperaturen von ca. 150°C ist die Härtung nach etwa 15 Minuten abgeschlossen. Läßt man dagegen das behandelte Papier bei Raumtemperatur stehen, ist die Härtung nach etwa drei Tagen soweit fortgeschritten, daß das Papier seinem bestimmungsgemäßen Zweck zugeführt werden kann.

Es ist ein besonderer Vorteil der ausgewählten Polysiloxane, daß man bei ihrer Anwendung auf jeden Zusatz von Härter verzichten kann und daß man insbesondere Papiere verwenden kann, die frei von Aluminiumsulfat sind. Die imprägnierten Papiere gestatten die fehlerfreie Herstellung von Gipsbauplatten ohne Streifenbildung und Delaminierungen. Die Papiere verwerfen sich in Verbindung mit dem feuchten Gipsbrei nicht. Es wird eine plane Oberfläche erhalten bzw. beibehalten.

In den folgenden Beispielen wird die nicht beanspruchte Herstellung der erfindungsgemäß zu verwendenden Verbindungen und deren Anwendung bei der Imprägnierung von Papieren für die Gipsplattenherstellung gezeigt.

## Beispiel 1

In einem mit Rührer, Destillationsbrücke und Thermometer ausgerüsteten Reaktionsgefäß werden 3775 Gew.-Teile eines $\alpha,\omega$-Dihydroxypolydimethylsiloxans mit einem OH-Gruppengehalt von 0,9 Gew.-% und 442,8 Gew.-Teile $\gamma$-Aminopropyltriäthoxysilan vermischt und auf 170°C erhitzt. Nach 2 Stunden waren 90,5 Gew.-Teile Äthanol abdestilliert. Diese Menge entspricht einem auf die OH-Gruppen bezogenen Umsatz von 98,2%.

Aus dem Ansatz errechnet sich eine mittlere Formel von

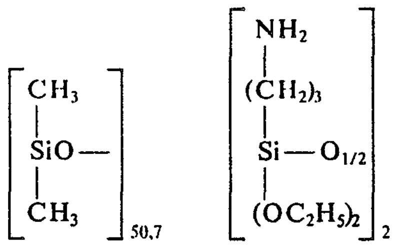

Das Produkt hat einen $OC_2H_5$-Gehalt von 4,4 Gew.-% und eine Viskosität von 156 $mm^2 \cdot s^{-1}$ bei 25°C. Aus diesem Wirkstoff wird eine Emulsion mit 50% Siloxangehalt nach folgender Methode hergestellt:

| | |
|---|---|
| 50,0 Gew.-Teile | des Siloxans werden mit |
| 2,0 Gew.-Teilen | eines Fettalkoholpolyglykoläthers, HLB 11,4, |
| 3,0 Gew.-Teilen | eines äthoxylierten natürlichen Triglycerids mit einem HLB von 17,5 |

vermischt und auf 60°C erwärmt.

In diese Mischung rührt man portionsweise 45,0 Gew.-Teile Wasser ein. Die erhaltene Voremulsion wird in einem Spalthomogenisator (Manton-Gaulin) bei ca. 150 bar nachhomogenisiert.

Zur Ermittlung der die Wasseraufnahme reduzierenden Wirkung der erfindungsgemäßen Siloxane, welche für die Herstellung von Karton für Gipskartonplatten verwendet werden, verfährt man in folgender Weise:

Ein 20 cm breiter und 30 cm langer Kartonabschnitt (mit einem Quadratmetergewicht von 153,5 g) wird durch Aufrakeln einer 1 Gew.-% des erfindungsgemäßen Siloxans enthaltenden verdünnten Emulsion beschichtet. Die Rakel wird so eingestellt, daß eine Siloxanauflage von 200 bis 250 $mg/m^2$ erreicht wird. Der so beschichtete feuchte Karton wird dann 15 Minuten lang bei 150°C getrocknet und anschließend 4 Stunden lang bei 20°C und 65% relativer Luftfeuchte konditioniert.

Die Bestimmung der Wasseraufnahme des so behandelten Kartonabschnitts geschieht auf folgende Weise: Zur Messung wird eine Vorrichtung verwendet, die aus einer Bodenplatte und einem Stahlring besteht, der auf die Bodenplatte aufpreßbar ist. Der Stahlring hat eine offene Grundfläche von 100 $cm^2$. Der gewogene Kartonabschnitt wird zwischen die Bodenplatte und den Ring fest eingespannt. Die eingespannte Ringfläche des Kartonabschnittes wird mit 100 ml Wasser von 20°C überschichtet. Nach 1 Minute wird das überstehende Wasser quantitativ entfernt. Der Kartonabschnitt wird der Meßvorrichtung entnommen und gewogen. Aus der Gewichtsdifferenz errechnet man die Wasseraufnahme in $g/m^2$ (sogenannter Cobb-Wert). Der nicht behandelte Karton zeigt unter diesen Bedingungen eine Wasseraufnahme von 113 $g/m^2$. Der mit dem erfindungsgemäßen Siloxan behandelte Kartonabschnitt hat nur eine Wasseraufnahme von 17,8 $g/m^2$.

## Beispiel 2

Nach der im Beispiel 1 beschriebenen Methode werden folgende Wirkstoffe hergestellt und geprüft:

Tabelle 1

| | Allgemeine Formel | Indices | Silicon-auflage in $mg/m^2$ | Wasser-aufnahme in $g/m^2$ |
|---|---|---|---|---|
| a | 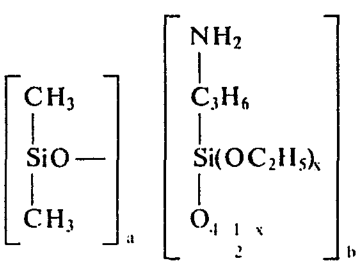 | a = 102<br>b = 3<br>x = 1,67 | 198 | 21,6 |

Fortsetzung

| | Allgemeine Formel | Indices | Silicon-auflage in mg/m² | Wasser-aufnahme in g/m² |
|---|---|---|---|---|
| b | wie a | a = 510<br>b = 11<br>x = 1,18 | 192 | 22,9 |
| c | wie a | a = 917<br>b = 2<br>x = 2 | 205 | 21,7 |
| d | 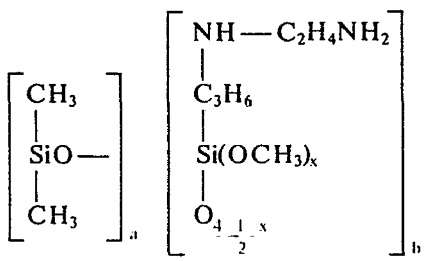 | a = 70,8<br>b = 2<br>x = 2 | 215 | 26,8 |
| e | 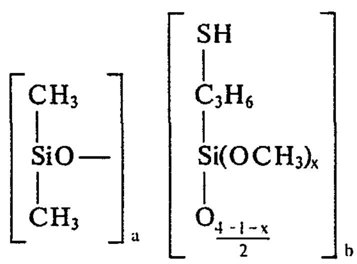 | a = 153<br>b = 4<br>x = 1,5 | 235 | 18,5 |
| f | 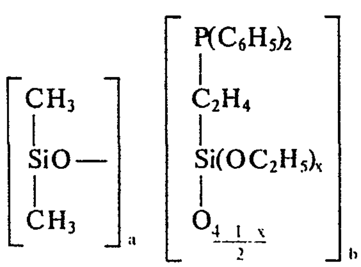 | a = 210<br>b = 4<br>x = 1,5 | 205 | 26,1 |

Beispiel 3

In eine Lösung von 20,3 Gew.-Teilen Didecyldimethylammoniumchlorid und 13,4 Gew.-Teilen Dialkyldimethylammoniumchlorid (Alkylrest abgeleitet von hydriertem Talg) in 707 g Wasser werden 13,4 g einer 1-n-Kaliumhydroxidlösung gegeben und das Gemisch auf 95°C erwärmt. Unter kräftigem Rühren werden während 75 Minuten zunächst 237,3 g (0,8 Mol) Octamethylcyclotetrasiloxan zugetropft. Danach werden während 15 Minuten 8,7 g (0,04 Mol)-Aminopropyltriäthoxysilan zugetropft. Es wird 1 Stunde bei 95°C nachgerührt. Danach wird auf 30°C abgekühlt und das eingesetzte Kaliumhydroxid mit Essigsäure neutralisiert. Die resultierende transparente feinteilige Emulsion enthält ein Siloxan der durchschnittlichen Formel

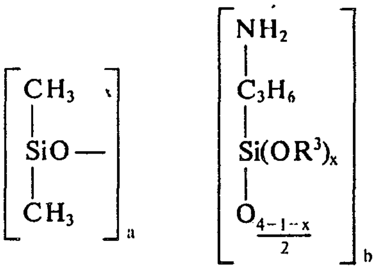

$R^3$ = 70% —H,
30% —$C_2H_5$

dabei bedeuten a = 40, b = 2, x = 2.

Die Prüfung des erfindungsgemäßen Siloxans erfolgt in der in Beispiel 1 beschriebenen Weise. Die Wasseraufnahme eines mit 230 mg Siloxan/m² beschichteten Kartons beträgt 20,4 g.

Es werden weitere Versuche mit Siloxanen durchgeführt, deren Formeln der Tabelle 2, Produkte g bis k, entnommen werden können. Der Tabelle 2 ist ferner auch die Wasseraufnahme eines mit jeweils einem erfindungsgemäßen Siloxan behandelten Kartons zu entnehmen.

Tabelle 2

| | Allgemeine Formel | Indices | Silicon-auflage in mg/m² | Wasser-aufnahme in g/m² |
|---|---|---|---|---|
| g | 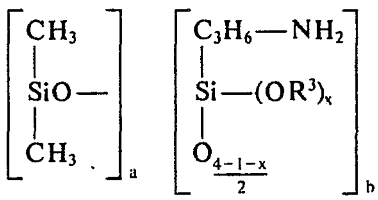 | a = 19<br>b = 2<br>x = 2 | 220 | 24,2 |
| h | 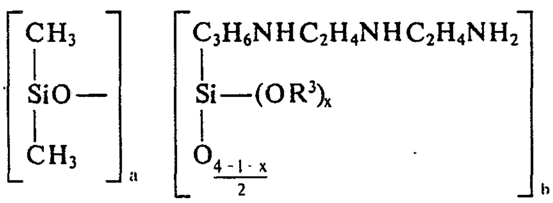 | a = 40<br>b = 2<br>x = 2 | 230 | 22,3 |
| i | 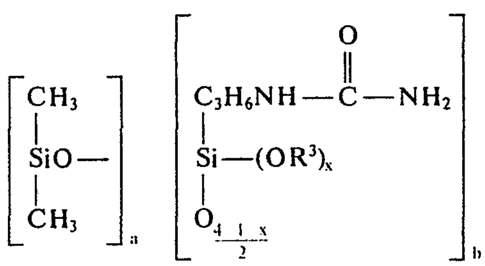 | a = 40<br>b = 2<br>x = 2 | 232 | 21,1 |
| k | 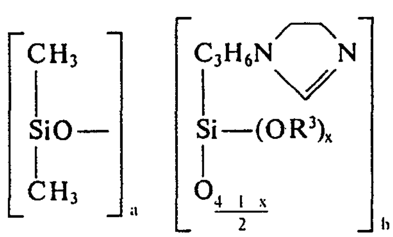 | a = 40<br>b = 2<br>x = 2 | 215 | 22,3 |

**Patentanspruch**

Verwendung von Organopolysiloxanen der allgemeinen durchschnittlichen Formel

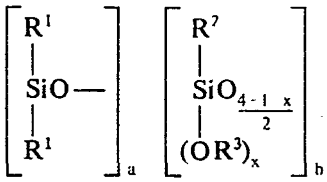

wobei

$R^1$ ein Alkyl- oder Arylrest ist, jedoch mindestens 80% der Reste $R^1$ Alkylreste sind,
$R^2$ ein Alkylrest oder der Rest $R^4Z$ ist, jedoch mindestens $^2/_3$ der Reste $R^2$ $R^4Z$-Reste sind, und wobei

$R^4$ ein zweiwertiger Kohlenwasserstoffrest und
Z der Rest $-NH_2$, $-NH(CH_2)_c-NH_2$, $-NH(CH_2)_cNH(CH_2)_cNH_2$, $-NHCONH_2$, wobei $c = 2$ oder 3 ist, $-SH$, $-S_4-R^4-Si(OR^3)_3$, $-P(C_6H_5)_2$,

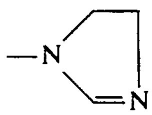

ist,

$R^3$ ein Alkylrest mit 1 bis 4 Kohlenstoffatomen oder ein Wasserstoffrest ist,
a $\geqq 4$,

$\frac{b}{a}$ $\geqq 0{,}001$, aber $\leqq 0{,}5$,

x $\geqq 0{,}1$, aber $\leqq 2$ ist,

als Mittel zur Verringerung der Wasseraufnahme von Papier, welches zur Abdeckung von Gipsbrei bei der Herstellung von mit Papier kaschierten Gipsplatten bestimmt ist.

**Claim**

Use of organopolysiloxanes of the general average formula:

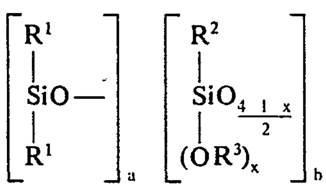

(I)

wherein

$R^1$ is an alkyl or aryl radical, but at least 80% of the $R^1$ radicals are alkyl radicals,
$R^2$ is an alkyl radical or is the radical $R^4Z$, but at least $^2/_3$ of the $R^2$ radicals are $R^4Z$ radicals, with

$R^4$ being a divalent hydrocarbon radical and
Z being the radical $-NH_2$, $-NH(CH_2)_c-NH_2$, $-NH(CH_2)_cNH(CH_2)_cNH_2$ or $-NHCONH_2$, where $c = 2$ or 3, $-SH$, $-S_4-R^4-Si(OR^3)_3$ or $-P(C_6H_5)_2$,

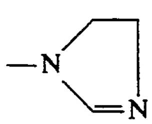

$R^3$ is an alkyl radical with 1 to 4 carbon atoms or a hydrogen radical,
a $\geqq 4$,

$\frac{b}{a}$ $\geqq 0.001$ but $\leqq 0.5$ and

x $\geqq 0.1$ but $\leqq 2$,

as means for reducing the water absorbtion of paper which is intended for covering a plaster slurry in the production of paper-faced plasterboard.

**Revendication**

Utilisation de polyorganosiloxanes de formule moyenne générale

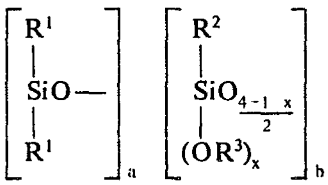

où

$R^1$ est un radical alkyle ou aryle, mais où au moins 80% des radicaux $R^1$ sont des radicaux alkyle,
$R^2$ est un radical alkyle ou le radical $R^4Z$, mais où au moins $^2/_3$ des radicaux $R^2$ sont des radicaux $R^4Z$, et où

$R^4$ est un radical hydrocarboné bivalent et
Z est le radical $-NH_2$, $-NH(CH_2)_c-NH_2$, $-NH(CH_2)_cNH(CH_2)_cNH_2$, $-NHCONH_2$, où $c = 2$ ou 3, $-SH$, $-S_4R^4-Si(OR^3)_3$, $-P(C_6H_5)_2$,

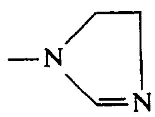

$R^3$ est un radical alkyle à 1 à 4 atomes de carbone ou un radical hydrogène,
a $\geq 4$,
$\frac{b}{a}$ $\geq 0{,}001$, mais $\leq 0{,}5$,
x $\geq 0{,}1$, mais $\leq 2$,

en tant que produit pour diminuer l'absorption d'eau par un papier destiné à recouvrir la pâte de plâtre lors de la fabrication de panneaux de plâtre recouverts de papier.